# EUROPEAN PATENT APPLICATION

(11) **EP 4 838 817 A1**
(43) Date of publication of application: **11.11.2026**
(21) Application number: 24921559.1
(22) Date of filing: 28.10.2024
(51) Int. Cl.: H04L 5/00

(54) **INFORMATION TRANSMISSION METHOD, COMMUNICATION SYSTEM, AND APPARATUS**

(30) Priority: 30.01.2024 CN 202410133474
(71) Applicant: Huawei Technologies Co., Ltd., Shenzhen, Guangdong 518129 (CN)
(72) Inventor: ZHOU, Yongbo, Shenzhen, Guangdong 518129 (CN); SHI, Leicheng, Shenzhen, Guangdong 518129 (CN); XU, Li, Shenzhen, Guangdong 518129 (CN); LI, Rixin, Shenzhen, Guangdong 518129 (CN); CHEN, Jingfeng, Shenzhen, Guangdong 518129 (CN)
(74) Representative: Gill Jennings & Every LLP
(86) International application number: PCT/CN2024/127749
(87) International publication number: WO 2025/161535

(57) **Abstract**

This application provides an information transmission method, and a communication system and apparatus, applied to the field of communication technologies. A transmitter may insert an OAM block between any two adjacent blocks in a block stream, within a data frame in the block stream, or between different data frames. This is not limited. A receiver may process the OAM block before decoding the block stream, so that the block stream can be correctly decoded. Transmitting OAM information according to the method in this application, can overcome a limitation on an insertion location of the OAM block in an existing standard, so that greater flexibility and better performance are offered.

## Description

This application claims priority to Chinese Patent Application No. 202410133474.7, filed with the China National Intellectual Property Administration on January 30, 2024 and entitled "INFORMATION TRANSMISSION METHOD, COMMUNICATION SYSTEM AND APPARATUS", which is incorporated herein by reference in its entirety.

### TECHNICAL FIELD

This application relates to the field of communication technologies, and in particular, to an information transmission method, and a communication system and apparatus.

### BACKGROUND

In the field of slicing Ethernet, in both the slicing packet network (slicing packet network, SPN) and the metro transport network (metro transport network, MTN), operation, administration, and maintenance (operation, administration and maintenance, OAM) information is specified to be encapsulated into a 64B/66B block defined by the Institute of Electrical and Electronics Engineers (institute of electrical and electronics engineers, IEEE) 802.3 standard. A block carrying the OAM information is referred to as an OAM block, and an OAM block may be inserted by replacing an idle (idle, I) block between different data frames in a block stream.

### SUMMARY

This application provides an information transmission method, and a communication system and apparatus. When inserting an OAM block, a transmitter does not limit an insertion location of the OAM block. Before decoding a block stream, a receiver may first process the OAM block, so that decoding of the block stream is not affected.

According to a first aspect, an information transmission method is provided. The method may be performed by a transmitter, or may be performed by a component of the transmitter, for example, a processor, a chip, or a chip system of the transmitter, or may be implemented by a logical module or software that can implement all or some functions of the transmitter. The method may include: first, obtaining an OAM block insertion request. Then, the OAM block is inserted into the block stream in response to the OAM block insertion request. The OAM block is inserted between a first block and a second block in the block stream, and the first block and the second block are any two adjacent blocks in the block stream. Then, the block stream into which the OAM block is inserted is encoded, to obtain an encoded block stream. Then, the encoded block stream is sent.

Based on this solution, the OAM block may be inserted between any blocks in the block stream, and does not need to be implemented by replacing an I block, and does not need to wait for an I block between data frames. Therefore, an OAM block insertion manner in this application is more flexible. In addition, because there is no need to wait for an I block between data frames, there is no need to wait for an end of a data frame before inserting an OAM block. In this way, a problem that an actual insertion periodicity of OAM is inconsistent with a preconfigured periodicity can be avoided, and OAM processing precision is higher. In addition, because there is no need to limit the OAM block to be inserted between different data frames, the method has no requirement on a length of a data frame, and an application scenario is wider.

With reference to the first aspect, in a possible implementation, a difference between a moment at which the OAM block is inserted into the block stream and a moment at which the OAM block insertion request is obtained is less than a time threshold.

With reference to the first aspect, in a possible implementation, inserting the OAM block into the block stream in response to the OAM block insertion request may include: in response to the OAM block insertion request, inserting the OAM block into a group of blocks that are first encoded after the moment at which the OAM block insertion request is obtained.

With reference to the first aspect, in a possible implementation, inserting the OAM block into the block stream in response to the OAM block insertion request may include: in response to the OAM block insertion request, inserting the OAM block into a group of blocks that are first encoded after a first moment. The first moment is a moment after the moment at which the OAM block insertion request is obtained.

With reference to the first aspect, in a possible implementation, the block stream includes a block sequence of a first data frame, and the OAM block is inserted into the block sequence of the first data frame.

With reference to the first aspect, in a possible implementation, the first block is a data D block in the block sequence of the first data frame, and the second block is also a D block in the block sequence of the first data frame; or the first block is a start S block in the block sequence of the first data frame, and the second block is a D block in the block sequence of the first data frame; or the first block is a D block in the block sequence of the first data frame, and the second block is a termination T block in the block sequence of the first data frame.

According to a second aspect, an information transmission method is provided. The method may be performed by a receiver, or may be performed by a component of the receiver, for example, a processor, a chip, or a chip system of the receiver, or may be implemented by a logical module or software that can implement all or some functions of the receiver. The method may include: first, receiving a block stream, where the block stream includes a block sequence of a first data frame, and the block sequence of the first data frame includes an OAM block. Then, an OAM block is processed to obtain a processed block stream. Then, the processed block stream is decoded.

Based on this solution, the OAM block in the block stream may be processed before the block stream is decoded, so that the OAM block does not affect decoding of a subsequent block stream.

With reference to the second aspect, in a possible implementation, that the OAM block is processed may include: extracting information about the OAM block; and deleting the OAM block from the block sequence of the first data frame.

With reference to the second aspect, in a possible implementation, that the OAM block is processed may include: extracting information about the OAM block; and replacing the OAM block in the block sequence of the first data frame with an idle I block.

With reference to the second aspect, in a possible implementation, the method may further include: processing the information about the OAM block, to determine transmission performance of the block stream.

With reference to the second aspect, in a possible implementation, the OAM block is located between a first block and a second block that are adjacent in the block sequence of the first data frame. The first block is a data D block in the block sequence of the first data frame, and the second block is also a D block in the block sequence of the first data frame; or the first block is a start S block in the block sequence of the first data frame, and the second block is a D block in the block sequence of the first data frame; or the first block is a D block in the block sequence of the first data frame, and the second block is a termination T block in the block sequence of the first data frame.

According to a third aspect, an information transmission method is provided. The method may be performed by a receiver, or may be performed by a component of the receiver, for example, a processor, a chip, or a chip system of the receiver, or may be implemented by a logical module or software that can implement all or some functions of the receiver. The method may include: first, receiving a block stream, where the block stream includes a block sequence of a first data frame, and the block sequence of the first data frame includes an OAM block. Then, the block stream is decoded to obtain the decoded block stream. Then, an OAM block in the decoded block stream is processed.

With reference to the third aspect, in a possible implementation, after the OAM block in the first data frame is input to a decoder, decoding still remains in an RX_D state.

With reference to the third aspect, in a possible implementation, that the OAM block in the decoded block stream is processed includes: extracting information about the OAM block in the decoded block stream; and then deleting the OAM block in the decoded block stream.

With reference to the third aspect, in a possible implementation, the method may further include: processing the information about the OAM block, to determine transmission performance of the block stream.

With reference to the third aspect, in a possible implementation, the OAM block is located between a first block and a second block that are adjacent in the block sequence of the first data frame. The first block is a data D block in the block sequence of the first data frame, and the second block is also a D block in the block sequence of the first data frame; or the first block is a start S block in the block sequence of the first data frame, and the second block is a D block in the block sequence of the first data frame; or the first block is a D block in the block sequence of the first data frame, and the second block is a termination T block in the block sequence of the first data frame.

According to a fourth aspect, a communication apparatus is provided, including a transceiver module and a processing module. The transceiver module may be configured to perform sending and receiving behavior in the information transmission method according to the first aspect, and the processing module may be configured to perform processing behavior in the information transmission method according to the first aspect. Alternatively, the transceiver module may be configured to perform sending and receiving behavior in the information transmission method according to the second aspect, and the processing module may be configured to perform processing behavior in the information transmission method according to the second aspect. Alternatively, the transceiver module may be configured to perform sending and receiving behavior in the information transmission method according to the third aspect, and the processing module may be configured to perform processing behavior in the information transmission method according to the third aspect.

According to a fifth aspect, a communication apparatus is provided, including a processor and a memory. The memory is configured to store computer instructions. When the apparatus runs, the processor executes the computer instructions stored in the memory, to enable the apparatus to perform the information transmission method according to any one of the first aspect, the second aspect, or the third aspect.

With reference to the fifth aspect, in a possible implementation, the apparatus further includes a communication interface. The communication interface is used by the apparatus to communicate with another device. For example, the communication interface may be a transceiver, an input/output interface, an interface circuit, an output circuit, an input circuit, a pin, or a related circuit.

According to a sixth aspect, a chip or a chip system is provided, including a processor, where the processor executes program instructions, so that the chip or the chip system performs the information transmission method according to any one of the first aspect, the second aspect, or the third aspect.

According to a seventh aspect, a computer-readable storage medium is provided. The computer-readable storage medium stores instructions. When the instructions are run on a computer, the computer is enabled to perform the information transmission method according to any one of the first aspect, the second aspect, or the third aspect.

For technical effect brought by any design in the fourth aspect to the seventh aspect, refer to technical effect brought by different designs in the first aspect, the second aspect, or the third aspect. Details are not described herein again.

### BRIEF DESCRIPTION OF DRAWINGS

FIG. 1 is a diagram of a block stream before and after an OAM block is inserted according to an embodiment of this application;
FIG. 2 is a diagram of another block stream before and after an OAM block is extracted according to an embodiment of this application;
FIG. 3 is a diagram of an OAM block insertion procedure according to an embodiment of this application;
FIG. 4 is a diagram of a structure of a communication system according to an embodiment of this application;
FIG. 5 is a schematic flowchart of an information transmission method according to an embodiment of this application;
FIG. 6 is a diagram of a block stream into which an OAM block is inserted according to an embodiment of this application;
FIG. 7 is a diagram of another block stream into which an OAM block is inserted according to an embodiment of this application;
FIG. 8 is a diagram of still another block stream into which an OAM block is inserted according to an embodiment of this application;
FIG. 9 is a diagram of yet another block stream into which an OAM block is inserted according to an embodiment of this application;
FIG. 10 is a diagram of still yet another block stream into which an OAM block is inserted according to an embodiment of this application;
FIG. 11 is a diagram of a further block stream into which an OAM block is inserted according to an embodiment of this application;
FIG. 12 is a diagram of a still further block stream into which an OAM block is inserted according to an embodiment of this application;
FIG. 13 is a diagram of an OAM block insertion process according to an embodiment of this application;
FIG. 14 is a diagram of inserting an OAM block by a transmitter according to an embodiment of this application;
FIG. 15 is another diagram of inserting an OAM block by a transmitter according to an embodiment of this application;
FIG. 16 is a schematic flowchart of another information transmission method according to an embodiment of this application;
FIG. 17 is a diagram of a decoding state machine of a PCS decoder at a receiver according to an embodiment of this application;
FIG. 18 is a diagram of a structure of a communication apparatus according to an embodiment of this application; and
FIG. 19 is a diagram of a structure of another communication apparatus according to an embodiment of this application.

### DESCRIPTION OF EMBODIMENTS

The following describes technical solutions in embodiments of this application with reference to accompanying drawings in embodiments of this application. In the description of this application, unless otherwise specified, "/" indicates that an "or" relationship between associated objects. For example, A/B may indicate A or B. "and/or" in this application merely describes an association relationship between associated objects and indicates that three relationships may exist. For example, A and/or B may indicate three cases: Only A exists, both A and B exist, or only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding. In addition, a network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

In the slicing Ethernet field, during data transmission, a media access control (media access control, MAC) layer of a transmitter may perform processing such as encapsulation, check, and queuing on a data frame provided by an upper layer, then divide the data frame into 64-bit (bit, B) blocks (block) at a reconciliation sublayer (reconciliation sublayer, RS), add some control information, and then send the control information to a physical coding sublayer (physical coding sublayer, PCS). The PCS layer may perform 64B-66B encoding, convert 64-bit data provided by the MAC layer into 66-bit data, perform processing such as encoding, scrambling, and synchronization, then serialize the data through a physical medium attachment (physical medium attachment, PMA) sublayer and a physical medium dependent (physical medium dependent, PMD) sublayer, and send the data to a physical medium for transmission.

It should be understood that the data frame exists at the PCS layer in a form of a block, and the data stream may also be referred to as a code stream or a block stream. This is uniformly described herein. A block sequence of a group of consecutive start (start, S) blocks+data (data, D) blocks+termination (terminate, T) blocks in the block stream is one data frame, where there is one S block and one T block, and there may be one or more D blocks. In addition, an I block may be further included between different data frames in the block stream.

OAM information is inserted at the PCS layer of the transmitter. The OAM information may be encapsulated into a block, and then the block is inserted into a block stream. According to a current standard in the art, an OAM block is inserted by replacing an I block between different data frames in the block stream.

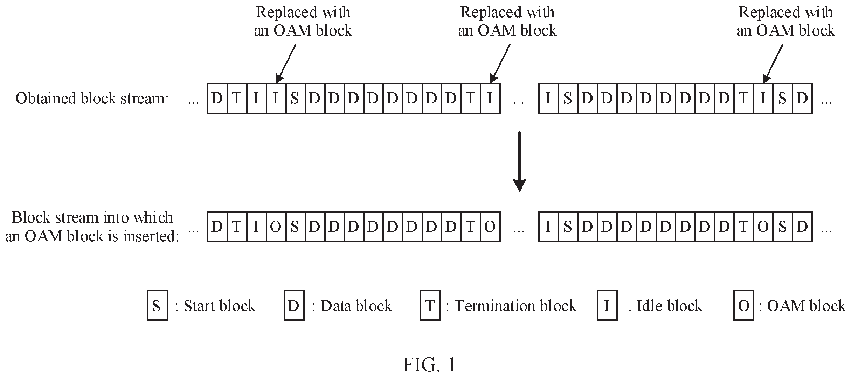

For example, FIG. 1 is a diagram of a block stream before and after an OAM block is inserted according to an embodiment of this application. As shown in FIG. 1, a block stream obtained by the transmitter may include a block sequence that is of an S block+a D block+a T block and that corresponds to a data frame, and an I block between data frames (that is, between a T block and an S block). The transmitter may replace at least one I block in the obtained block stream with an OAM block, to obtain a block stream into which an OAM block is inserted. Then, the transmitter may encode and send the block stream into which the OAM block is inserted.

When the block stream received by a receiver includes the OAM block, the receiver may first extract information about the OAM block, then replace the OAM block with the I block, and then decode the block stream obtained through the foregoing processing.

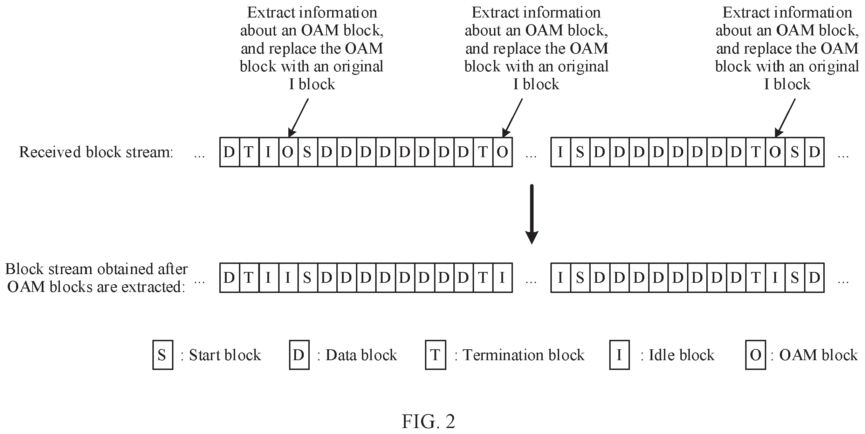

For example, FIG. 2 is a diagram of another block stream before and after an OAM block is extracted according to an embodiment of this application. As shown in FIG. 2, a block stream received by the receiver may include a block sequence that is of an S block+a D block+a T block and that corresponds to a data frame, an I block between data frames (that is, between a T block and an S block), and an OAM block between data frames (that is, between a T block and an S block). The receiver may first extract information about the OAM block in the received block stream, and replace the OAM block with the I block, to obtain a block stream obtained after the OAM block is extracted. Then, the receiver may decode the block stream obtained after the OAM block is extracted.

Based on the foregoing OAM information insertion and extraction manners, OAM information transmission can be implemented, and an upper layer of the PCS is unaware of an OAM information insertion and extraction process.

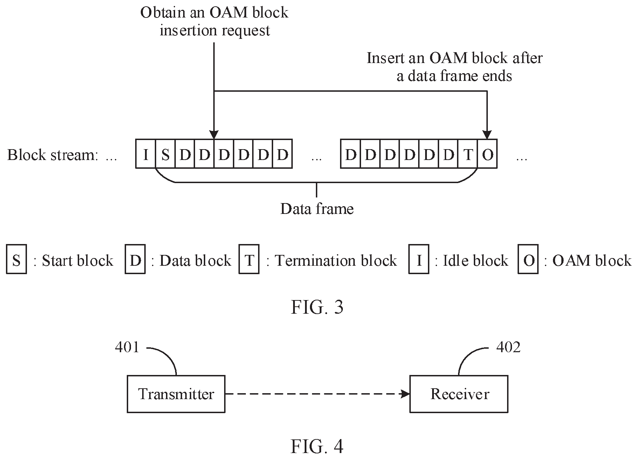

However, the current OAM block insertion manner needs to wait for the arrival of the I block. For example, FIG. 3 is a diagram of an OAM block insertion procedure. As shown in FIG. 3, if a moment at which an OAM block insertion request is obtained is in a data frame of a block stream, a device needs to wait until a current data frame ends, and then insert the OAM block by replacing the I block.

The current OAM block insertion method has some problems. First, if the moment at which the OAM block insertion request is obtained is in the data frame, the OAM block needs to be inserted after the current data frame ends. In this case, an insertion periodicity of the OAM block is different from a preconfigured periodicity, and OAM processing precision is compromised. In addition, if there is no I block between the current data frame and a next data frame when the OAM block insertion request is obtained, waiting needs to be continued until the I block arrives, and waiting time for inserting the OAM block is long. In addition, because an OAM block is inserted between different data frames, an insertion periodicity of the OAM block is at least equal to a length of one data frame. However, in the current standard, there is a specific requirement on an insertion periodicity of OAM, so that the foregoing OAM insertion method also limits the length of the data frame, and the length of the data frame cannot exceed the requirement on the periodicity of OAM. For example, the OAM insertion periodicity defined in the current small-granularity MTN standard may be that every 512 blocks may be inserted once at most, and therefore, the length of the data frame cannot exceed 512 blocks. In this standard, if the length of a data frame exceeds 512 blocks, OAM timeliness does not meet the requirement and the OAM function cannot be implemented.

In view of this, an embodiment of this application provides an information transmission method. Instead of waiting for an I block to be inserted into an OAM block in a replacement manner, the OAM block may be directly inserted between any two blocks in a block stream, thereby greatly improving flexibility of inserting the OAM block. In addition, because the OAM block insertion manner provided in this application does not need to wait, an OAM block insertion periodicity can be strictly ensured, and OAM processing precision is very high.

Before the information transmission method provided in embodiments of this application is described, a communication system/service scenario to which the information transmission method in this application is applied is first described.

FIG. 4 is a diagram of a structure of a communication system according to this application. As shown in FIG. 4, the communication system may include a transmitter 401 and a receiver 402. The transmitter 401 and the receiver 402 may perform end-to-end data transmission. The information transmission method provided in this application may be applied to the communication system shown in FIG. 4. The transmitter 401 may perform an OAM insertion operation provided in this application, and the receiver 402 may perform an OAM extraction operation provided in this application. For a detailed solution, refer to the following method embodiment. Details are not described herein again.

It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The following describes the information transmission method provided in embodiments of this application with reference to the communication system shown in FIG. 4. For actions, terms, and the like in embodiments of this application, refer to each other. This is not limited. In embodiments of this application, a message name, a parameter name in a message, or the like is merely an example. During specific implementation, other names may be used. This is not limited.

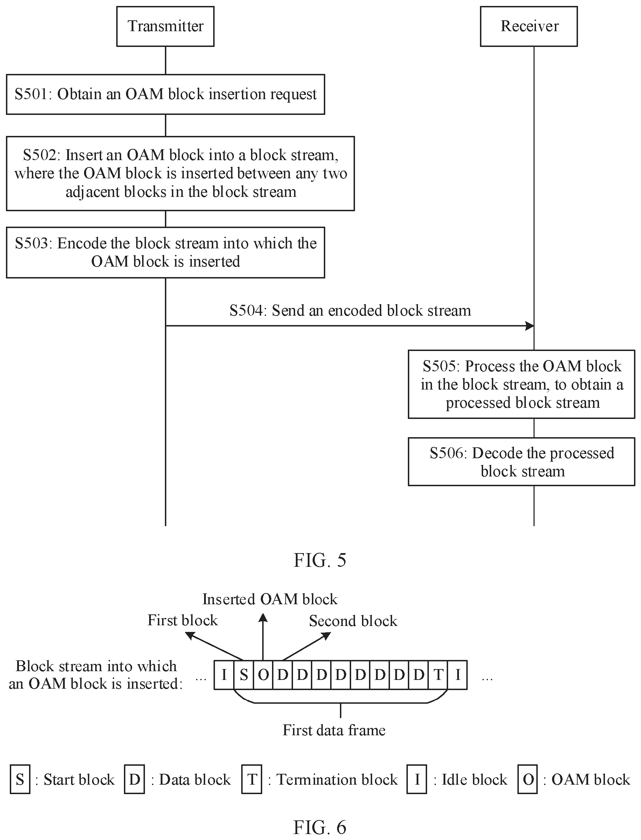

FIG. 5 is a schematic flowchart of an information transmission method according to an embodiment of this application. As shown in FIG. 5, the method may include the following steps.

S501: A transmitter obtains an OAM block insertion request.

In a possible implementation, the OAM block insertion request is periodically generated by the transmitter.

In another possible implementation, the OAM block insertion request is generated by an event-triggered transmitter.

In still another possible implementation, the OAM block insertion request is generated by the transmitter based on an OAM information insertion requirement.

It should be understood that a manner of obtaining OAM block insertion request information is related to a type of OAM information carried in an OAM block to be inserted. For example, for OAM information that needs to be inserted periodically, a corresponding OAM block insertion request is naturally generated periodically. For OAM information sent in an event-triggered manner, a corresponding OAM block insertion request is also triggered by an event. For OAM information sent on demand, a corresponding OAM block insertion request is also generated on demand.

S502: The transmitter inserts the OAM block into a block stream in response to the OAM block insertion request information. The OAM block is inserted between a first block and a second block in the block stream, and the first block and the second block are any two adjacent blocks in the block stream.

In the solution of this application, insertion of an OAM block does not need to be implemented by replacing an I block, and does not need to wait for an I block between data frames. The OAM block may be inserted between any blocks. Therefore, an OAM block insertion manner in this application is more flexible. In addition, an actual insertion periodicity of OAM is not inconsistent with a pre-configured periodicity due to waiting for the end of the data frame, and the OAM processing precision is higher. In addition, because there is no need to limit the OAM block to be inserted between different data frames, the method has no requirement on a length of a data frame, and an application scenario is wider.

Optionally, the block stream may include block sequences of a plurality of data frames, the OAM block may be inserted into a block sequence of a first data frame in the block stream, and the first block and the second block are two adjacent blocks in the block sequence of the first data frame.

In a possible case, the first block may be an S block in the block sequence of the first data frame, and the second block may be a D block adjacent to the S block in the block sequence of the first data frame. For example, FIG. 6 is a diagram of a block stream into which an OAM block is inserted. As shown in FIG. 6, a block sequence of the first data frame in the block stream into which the OAM block is inserted includes the OAM block, a previous block (that is, the first block) of the OAM block is an S block, and a next block (that is, the second block) of the OAM block is a D block.

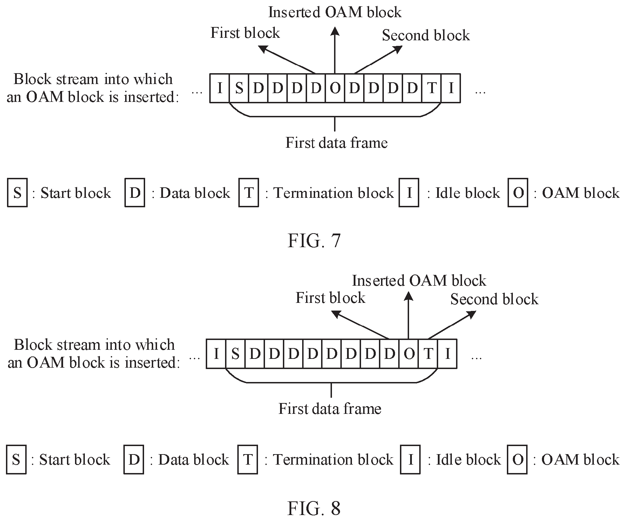

In another possible case, the first block is a D block in the block sequence of the first data frame, and the second block is also a D block in the block sequence of the first data frame. For example, FIG. 7 is a diagram of another block stream into which an OAM block is inserted. As shown in FIG. 7, a block sequence of the first data frame in the block stream into which the OAM block is inserted includes the OAM block, a previous block (that is, the first block) of the OAM block is a D block, and a next block (that is, the second block) of the OAM block is also a D block.

In still another possible case, the first block is a D block in the block sequence of the first data frame, and the second block is a T block adjacent to the D block in the block sequence of the first data frame. For example, FIG. 8 is a diagram of still another block stream into which an OAM block is inserted. As shown in FIG. 8, a block sequence of the first data frame in the block stream into which the OAM block is inserted includes the OAM block, a previous block (that is, the first block) of the OAM block is a D block, and a next block (that is, the second block) of the OAM block is a T block.

Optionally, the block stream may include block sequences of a plurality of data frames, or the OAM block may be inserted between block sequences of two consecutive data frames in the block stream, and the first block and the second block do not belong to a block sequence of a same data frame.

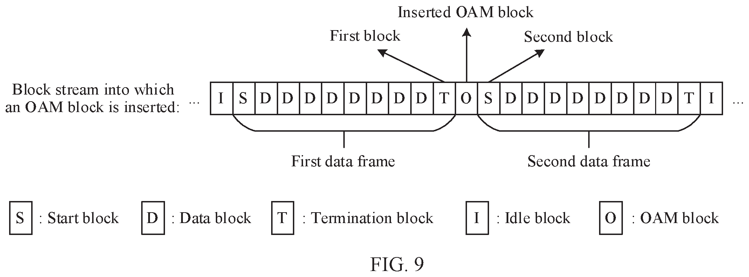

In a possible case, the first block is a T block in the block sequence of the first data frame, the second block is an S block in the block sequence of the second data frame, and the first data frame and the second data frame are two consecutive data frames in the block stream. For example, FIG. 9 is a diagram of yet another block stream into which an OAM block is inserted. As shown in FIG. 9, in the block stream into which an OAM block is inserted, the OAM block is located between a first data frame and a second data frame, a previous block (that is, the first block) of the OAM block is a T block in a block sequence of the first data frame, and a next block (that is, the second block) of the OAM block is an S block in a block sequence of the second data frame.

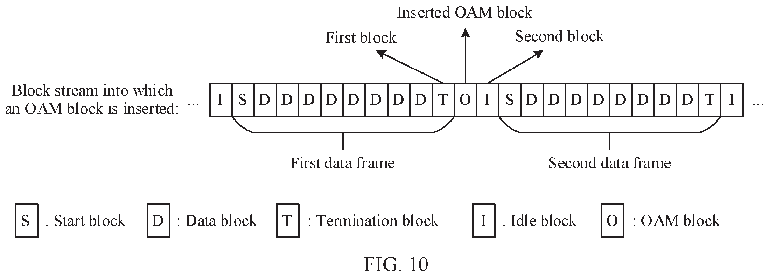

In another possible case, the first block is a T block in the block sequence of the first data frame, the second block is an I block between the block sequence of the first data frame and the block sequence of the second data frame, and the first data frame and the second data frame are two consecutive data frames in the block stream. For example, FIG. 10 is a diagram of still yet another block stream into which an OAM block is inserted. As shown in FIG. 10, in the block stream into which an OAM block is inserted, the OAM block is located between a first data frame and a second data frame, a previous block (that is, the first block) of the OAM block is a T block in a block sequence of the first data frame, and a next block (that is, the second block) of the OAM block is an I block.

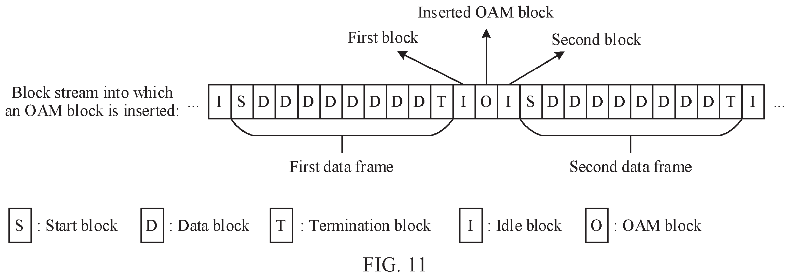

In still another possible case, the first block and the second block are two I blocks between block sequences of the first data frame and the second data frame, and the first data frame and the second data frame are two consecutive data frames in the block stream. For example, FIG. 11 is a diagram of a further block stream into which an OAM block is inserted. As shown in FIG. 11, in the block stream into which an OAM block is inserted, the OAM block is located between a first data frame and a second data frame, and both a previous block (that is, the first block) and a next block (that is, the second block) of the OAM block are I blocks.

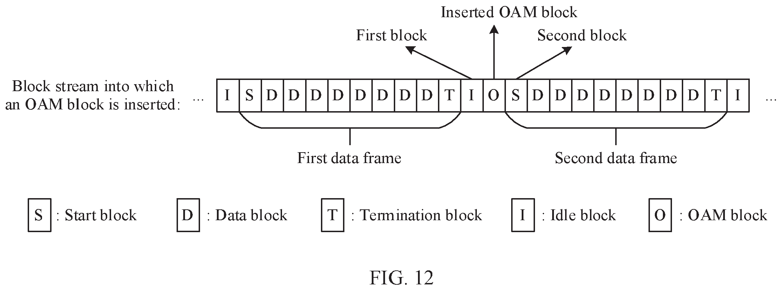

In yet another possible case, the first block is an I block between the block sequence of the first data frame and the block sequence of the second data frame, the second block is an S block in the block sequence of the second data frame, and the first data frame and the second data frame are two consecutive data frames in the block stream. For example, FIG. 12 is a diagram of still further block stream into which an OAM block is inserted. As shown in FIG. 12, in the block stream into which an OAM block is inserted, the OAM block is located between a first data frame and a second data frame, a previous block (that is, the first block) of the OAM block is an I block, and a next block (that is, the second block) of the OAM block is an S block in a block sequence of the second data frame.

Optionally, after inserting the OAM block, the transmitter may correspondingly delete I blocks of a same quantity as the inserted OAM block, so that a block stream into which the OAM block is inserted has a same length as a previous block stream, thereby implementing rate matching.

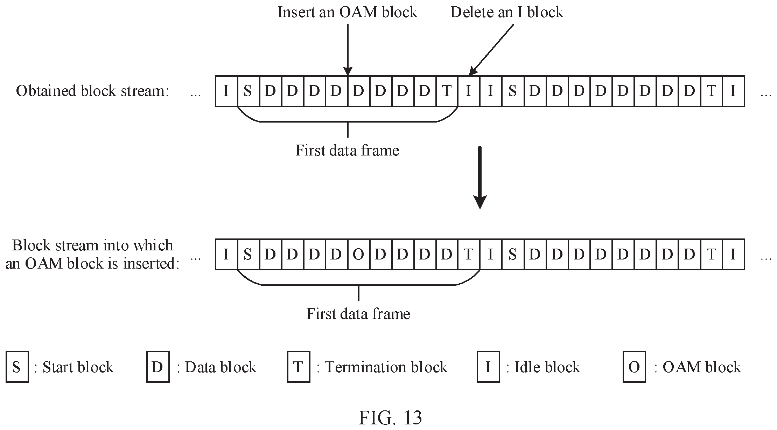

For example, FIG. 13 is a diagram of an OAM block insertion process. As shown in FIG. 13, two I blocks are included between a first data frame and a second data frame in a block stream obtained by a transmitter. When the OAM block is inserted, one OAM block may be inserted between two D blocks in the block sequence corresponding to the first data frame. Correspondingly, a subsequent I block may be deleted, for example, one I block between the first data frame and the second data frame may be deleted. As shown in a block stream into which an OAM block is inserted in FIG. 13, one more OAM block is added to the block sequence of the first data frame, and one I block is missing between the first data frame and the second data frame. A length of the block stream remains unchanged before and after the OAM block is inserted.

It should be understood that, if one OAM block is inserted between two data frames, and one I block between the two data frames is deleted after the OAM block is inserted, it is equivalent to inserting the OAM block in a manner of replacing the I block.

Optionally, when there is a redundant bandwidth in a data transmission channel, the transmitter may not delete the I block after inserting the OAM block. Even if lengths of block stream before and after the OAM block is inserted are inconsistent, rate matching can still be implemented.

It can be learned from the foregoing description that the PCS layer of the transmitter may be configured to encode an upper-layer 64B block stream into a 66B block stream. In this embodiment of this application, the OAM block may be inserted before the PCS layer of the transmitter encodes the 64B block stream. That the transmitter inserts the OAM block into the block stream may include: The PCS layer of the transmitter inserts a 64B OAM block into the 64B block stream.

Optionally, a difference between a moment at which the transmitter inserts the OAM block into the block stream and a moment at which the transmitter obtains the OAM block insertion request is less than a time threshold. The transmitter may immediately insert the OAM block after obtaining the OAM block insertion request, or may insert the OAM block after waiting for a period of time. This is not limited in this application, and is more flexible.

Optionally, the PCS encoder at the transmitter may encode the block stream in a unit of a group. Each time, a group of blocks in the block stream may be input to the PCS encoder for encoding, and the groups may be divided based on a sequence of block streams. Based on this, in a possible implementation, after obtaining the OAM block insertion request, the transmitter may insert the OAM block into a group of blocks that are first encoded after the moment at which the OAM block insertion request is obtained. It should be understood that a block in the block stream after the inserted OAM block needs to be sequentially moved backward.

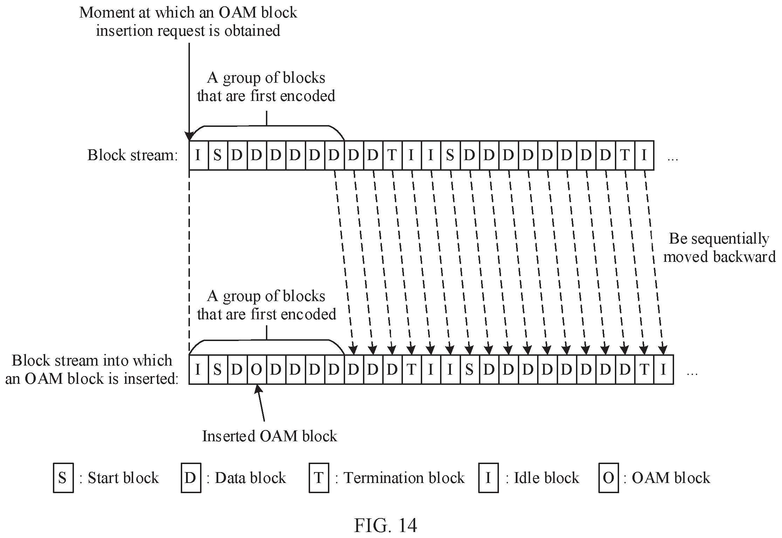

For example, FIG. 14 is a diagram of inserting an OAM block by a transmitter. In FIG. 14, eight blocks are encoded each time. After the transmitter obtains an OAM block insertion request, the transmitter may insert the OAM block into eight blocks that are first encoded after a moment at which the OAM block insertion request is obtained. After the OAM block is inserted, a block located after the OAM block insertion location needs to be sequentially moved backward.

In another possible implementation, after obtaining the OAM block insertion request, the transmitter may insert the OAM block into a group of blocks that are first encoded after the first moment. The first moment is a moment after the moment at which the transmitter obtains the OAM block insertion request, and a difference between the first moment and the moment at which the OAM block insertion request is obtained may be preconfigured.

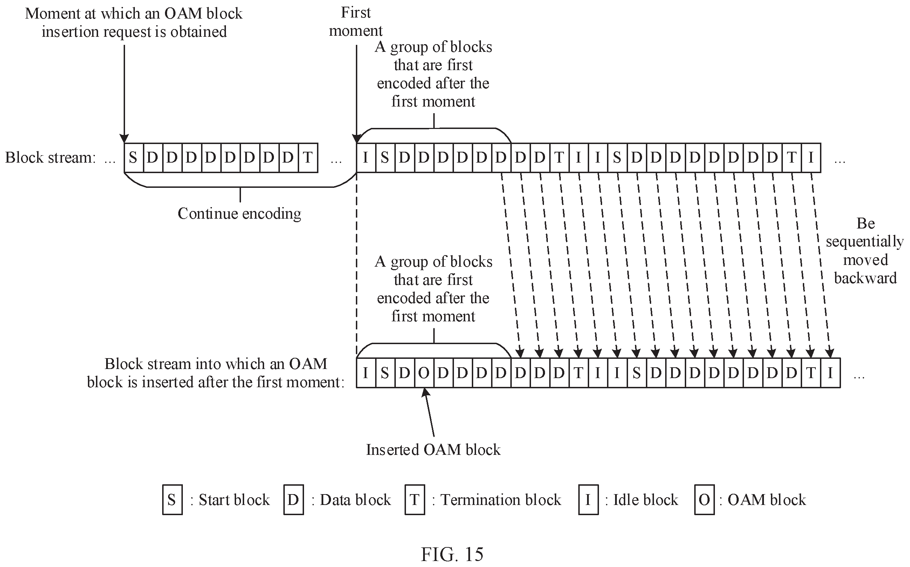

For example, FIG. 15 is another diagram of inserting an OAM block by a transmitter. In FIG. 15, encoding eight blocks each time is used as an example. After obtaining the OAM block insertion request, the transmitter may temporarily not insert the OAM block, and continue to encode the block stream. Until the first moment, the transmitter may insert the OAM block into a group of blocks that are first encoded after the first moment. After the OAM block is inserted, a block located after the OAM block insertion location needs to be sequentially moved backward.

Optionally, a difference between the first moment and the moment at which the OAM block insertion request is obtained may be set based on a time value, or may be set based on a quantity of blocks at an interval between the first moment and the moment at which the OAM block insertion request is obtained. This is not limited in this application.

Optionally, the insertion location of the OAM block may be a middle location of a group of blocks that are first encoded, to reduce a probability that a code group to which the OAM block belongs changes due to jitter, and ensure OAM measurement precision. For example, as shown in FIG. 14 and FIG. 15, eight blocks are encoded each time. The OAM block may be a fourth block in a group of blocks that are first encoded. Certainly, the OAM block may also be a block in another location in a group of blocks that are first encoded, for example, a fifth block.

S503: The transmitter encodes the block stream into which the OAM block is inserted, to obtain an encoded block stream.

It can be learned from the description in step 502 that the OAM block is inserted into the 64B block stream. Therefore, that the transmitter encodes the block stream into which the OAM block is inserted, to obtain the encoded block stream means that the transmitter encodes the 64B block stream into which the OAM block is inserted, to obtain the encoded 66B block stream.

S504: The transmitter sends the encoded block stream to a receiver, and correspondingly, the receiver receives the encoded block stream from the transmitter.

The transmitter may send the encoded 66B block stream to a physical medium, and then transmit the encoded 66B block stream to the receiver. Correspondingly, the receiver may receive the 66B block stream from the physical medium, and the block stream may include an OAM block.

S505: The receiver processes the OAM block in the block stream, to obtain a processed block stream.

Optionally, the OAM block may include a feature character, and the receiver may identify the OAM block in the block stream based on the feature character, to process the OAM block.

In this embodiment of this application, before processing the OAM block, the receiver does not need to check whether the OAM block is in the data frame, which is more flexible.

In an implementation, that the receiver processes the OAM block in the block stream may include: The receiver extracts information about the OAM block, and then deletes the OAM block from the block stream.

In another implementation, that the receiver processes the OAM block in the block stream may include: The receiver extracts information about the OAM block, and then replaces the OAM block with an I block.

Optionally, after extracting the information about the OAM block, the receiver may further process the information extracted from the OAM block, to determine transmission performance of the block stream. In an implementation, the receiver may perform bit interleaved parity (bit interleaved parity) check on the information extracted from the OAM block, to determine a bit error rate of the OAM block. Further, the measured bit error rate of the OAM block may be used to estimate a bit error rate of the entire block stream. In another implementation, the receiver may view a timestamp in information extracted from the OAM block, and then perform delay measurement (delay measurement, DM) based on the timestamp. The measured delay between different OAM blocks may be used to estimate a transmission delay of an entire block stream.

S506: The receiver decodes the processed block stream.

Optionally, that the receiver decodes the processed block stream means that the receiver decodes the processed 66B block stream into a 64B block stream.

In a possible implementation, if the receiver deletes the OAM block from the block stream in step 504, the processed block stream does not include the OAM block. In this implementation, the receiver may perform decoding in a conventional decoding manner, and no modification is required at the receiver. The solution of this implementation may be compatible with an existing communication device in the art, and the solution has good compatibility and can be deployed on a large scale.

In another possible implementation, if the receiver replaces the OAM block with the I block in step 504, the data frame in the processed block stream may include the I block. In this implementation, the PCS decoder at the receiver needs to support decoding if the data frame includes the I block. In this field, some communication devices (for example, enhanced idle adjustment processing (enhanced idle adjustment processing, EIAP) devices) of some vendors currently support decoding if the data frame includes the I block. A solution of this implementation may be compatible with such a communication device.

Optionally, for a case in which the receiver replaces the OAM block with the I block in step 504, when decoding the data frame in the block stream in step 505, the receiver continues to perform decoding even if the I block is identified, and no error is reported. The I block does not carry information about the data frame, and the receiver may discard the I block after decoding.

Based on the information transmission method provided in this application, an occasion and a location of inserting the OAM block by the transmitter are not limited, and are more flexible. Because an insertion location of the OAM block is not limited, an insertion periodicity of OAM may be implemented strictly based on a configured periodicity, and precision is higher. In addition, because insertion of the OAM block does not need to wait for an end of a data frame, there is no need to limit a length of the data frame in this solution, and an application scenario is wider. Before decoding the block stream, the receiver may first delete the OAM block or replace the OAM block with the I block, so that the receiver can be compatible with a decoding capability of an existing device, and the solution of this application can be applied to a device that has been deployed in the art.

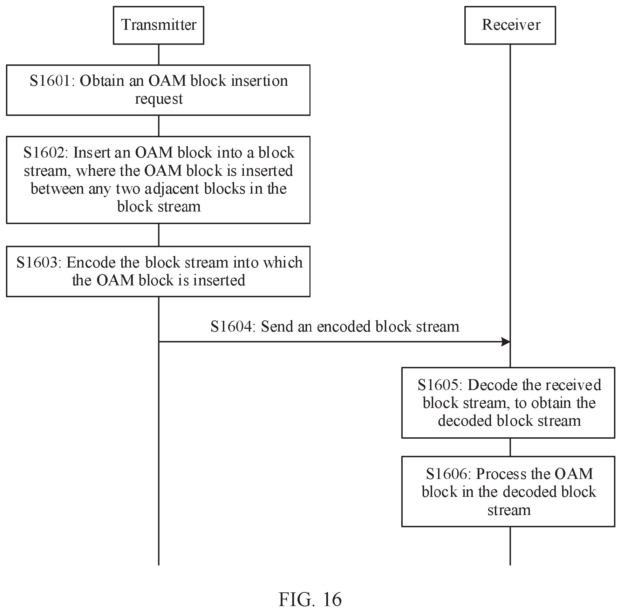

FIG. 16 is a schematic flowchart of another information transmission method according to an embodiment of this application. As shown in FIG. 16, the method may include the following steps.

S1601 to S1604 are the same as steps S501 to S504, and details are not described herein again.

S1605: A receiver decodes a received block stream, to obtain the decoded block stream.

In this embodiment, the receiver may directly send a block stream including an OAM block to a PCS decoder for decoding.

Optionally, that the receiver decodes the block stream means that the receiver decodes a 66B block stream into a 64B block stream.

It should be understood that, in a conventional OAM block insertion solution, the OAM block is inserted between different data frames in a block stream, so that an existing communication device supports insertion of the OAM block between different data frames in the block stream for decoding. However, an existing communication device does not support a case in which an OAM block is inserted into a block sequence of a data frame in a block stream, and an error occurs during decoding.

In this embodiment of this application, the decoding state machine of the PCS decoder at the receiver may be improved, so that the receiver supports decoding of a first data frame including the OAM block.

In an implementation, after the OAM block in the block sequence of the first data frame is input to the PCS decoder of the receiver, the PCS decoder of the receiver may continue to remain in an RX_D state without jumping to another state. Therefore, it can be ensured that the block in the first data frame can be successfully decoded, and information transmission can be correctly performed between the receiver and a transmitter.

S1606: The receiver processes an OAM block in the decoded block stream.

Optionally, that the receiver processes the OAM block in the decoded block stream may include: The receiver extracts information about the OAM block in the decoded block stream, and then deletes the OAM block in the decoded block stream.

It should be understood that insertion and extraction of the OAM block are both performed at a PCS layer, and an upper layer is unaware of the insertion and extraction. The receiver deletes the OAM block in the decoded block stream, to hand over the block stream from which the OAM block is deleted to the upper layer for processing.

Optionally, after extracting the information about the OAM block, the receiver may further perform processing based on the obtained information about the OAM block, to determine transmission performance of the block stream. For processing of the information about the OAM block by the receiver, refer to related descriptions in step S505. Details are not described herein again.

Compared with the method in step S501 to step S505, the method in step S1601 to step S1606 provides another solution in which the receiver receives the block stream. For the OAM block insertion solution provided in this application, the receiver can still correctly receive the block stream and extract the OAM block.

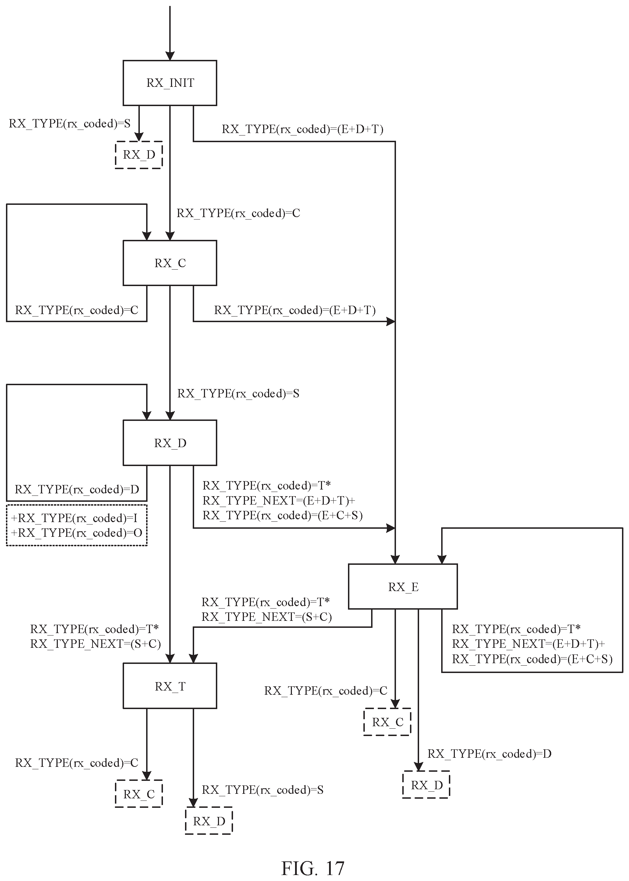

The following describes the decoding state machine of the PCS decoder at the receiver with reference to FIG. 17. As shown in FIG. 17, the PCS decoder at the receiver may include the following states: RX_INIT, RX_C, RX_D, RX_T, and RX_E. RX_INIT is an initialization state, RX_C is an inter-data frame reception control (control, C) block state, RX_D is a data frame receiving block state, RX_T is a data frame end state, and RX_E is a received abnormal error (error, E) block state.

As shown in FIG. 17, a jumping relationship between states of the PCS decoder may include the following cases:

After the PCS decoder is initialized, the PCS decoder can enter the RX_INIT state.

After receiving a C block (represented by RX_TYPE (rx_coded)=C in FIG. 17), the PCS decoder in the RX_INIT state may jump to the RX_C state.

After receiving an S block (represented by RX_TYPE (rx_coded)=S in FIG. 17), the PCS decoder in the RX_INIT state may jump to the RX_D state.

After receiving an E block, a D block, or a T block (represented by RX_TYPE (rx_coded)=(E+D+T) in FIG. 17), the PCS decoder in the RX_INIT state may jump to the RX_E state.

After receiving the C block (represented by RX_TYPE (rx_coded)=C in FIG. 17), the decoder in the RX_C state still remains in the RX_C state.

After receiving the S block (represented by RX_TYPE (rx_coded)=S in FIG. 17), the decoder in the RX_C state may jump to the RX_D state.

After receiving the E block, the D block, or the T block (represented by RX_TYPE (rx_coded)=(E+D+T) in FIG. 17), the PCS decoder in the RX_C state may jump to the RX_E state.

After receiving the D block (represented by RX_TYPE (rx_coded)=D in FIG. 17), the decoder in the RX_D state still remains in the RX_D state.

After receiving the T block and receiving a next block that is the S/C block (represented by RX_TYPE (rx_coded)=T*RX_TYPE_NEXT=(S+C) in FIG. 17), the decoder in the RX_D state may jump to the RX_T state.

When receiving the T block and receiving a next block that is the E/D/T block (represented by RX_TYPE (rx_coded)=T*RX_TYPE_NEXT=(E+D+T) in FIG. 17), or receiving an E/S/C block (represented by RX_TYPE (rx_coded)=(E+S+C) in FIG. 17), the decoder in the RX_D state may jump to the RX_E state.

After receiving the C block (represented by RX_TYPE (rx_coded)=C in FIG. 17), the decoder in the RX_T state may jump to the RX_C state.

After receiving the S block (represented by RX_TYPE (rx_coded)=S in FIG. 17), the decoder in the RX_T state may jump to the RX_D state.

When receiving the T block and receiving a next block that is an E/D/T block (represented by RX_TYPE (rx_coded)=T * RX_TYPE_NEXT=(E+D+T) in FIG. 17), the decoder in the RX_E state still remains in the RX_E state. Alternatively, after receiving the E/S block (represented by RX_TYPE (rx_coded)=(E+S) in FIG. 17), the decoder in the RX_E state still remains in the RX_E state.

When receiving the T block and receiving a next block that is the S/C block (represented by RX_TYPE (rx_coded)=T* RX_TYPE_NEXT=(S+C) in FIG. 17), the decoder in the RX_E state may jump to the RX_T state.

After receiving the D block (represented by RX_TYPE (rx_coded)=D in FIG. 17), the decoder in the RX_E state may jump to the RX_D state.

After receiving the C block (represented by RX_TYPE (rx_coded)=C in FIG. 17), the decoder in the RX_E state may jump to the RX_C state.

It should be noted that an I block and an OAM block are control blocks. In a current standard, after receiving the C block, the PCS decoder in the RX_D state jumps to the RX_E state, and the decoder considers that an error occurs in a currently decoded data frame.

Optionally, in this application, a jumping condition in which the PCS decoder at the receiver is in the RX_D state is modified, so that after receiving the OAM block and the I block, the PCS decoder still remains in the RX_D state for decoding. For example, as shown in FIG. 17, RX_TYPE (rx_coded)=I (indicating that an I block is received) and RX_TYPE (rx_coded)=O (indicating that the OAM block is received) are additionally added to the condition for keeping the PCS state machine in the RX_D state. It should be understood that, if the decoder receives the OAM block and the I block in the data frame but still remains in the RX_D state, the decoder considers that the currently decoded data frame is correct.

Optionally, the information transmission method in embodiments of this application may be performed by a communication apparatus. The communication apparatus may be the management apparatus in the foregoing method embodiments, or a device including the management apparatus, or may be a component that can be used in the management apparatus. To implement the foregoing functions, the communication apparatus includes a corresponding hardware structure and/or software module for implementing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use a different method for each particular application to implement the described functions, but it should not be considered that the implementation goes beyond the scope of this application.

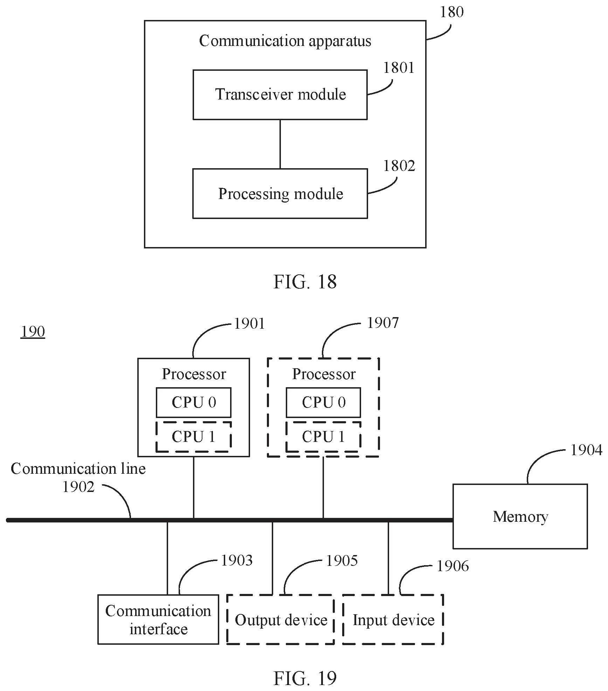

FIG. 18 is a diagram of a structure of a communication apparatus. The communication apparatus 180 includes a transceiver module 1801 and a processing module 1802. The transceiver module 1801 may be a transceiver circuit, a transceiver machine, a transceiver, a communication interface, or the like.

An example in which the communication apparatus 180 is the transmitter in the foregoing method embodiment is used.

The transceiver module 1801 may be configured to obtain an operation, administration, and maintenance OAM block insertion request. The processing module 1802 may be configured to insert an OAM block into a block stream in response to the OAM block insertion request. The OAM block is inserted between a first block and a second block in the block stream, and the first block and the second block are any two adjacent blocks in the block stream. The processing module 1802 may be further configured to encode the block stream into which the OAM block is inserted, to obtain an encoded block stream. The transceiver module 1801 may be further configured to send the encoded block stream.

Optionally, that the processing module 1802 inserts the OAM block into the block stream in response to the OAM block insertion request may specifically include: The processing module 1802 is configured to: in response to the OAM block insertion request, insert the OAM block into a group of blocks that are first encoded after a moment at which the OAM block insertion request is obtained.

Optionally, that the processing module 1802 inserts the OAM block into the block stream in response to the OAM block insertion request may specifically include: The processing module 1802 may be configured to: in response to the OAM block insertion request, insert the OAM block into a group of blocks that are first encoded after a first moment. The first moment is a moment after the moment at which the OAM block insertion request is obtained.

An example in which the communication apparatus 180 is the receiver in the foregoing method embodiment is used.

The transceiver module 1801 may be configured to receive a block stream, where the block stream includes a block sequence of a first data frame, and the block sequence of the first data frame includes an OAM block. The processing module 1802 may be configured to process the OAM block, to obtain a processed block stream. The processing module 1802 may be further configured to decode the processed block stream.

Optionally, that the processing module 1802 may be configured to process the OAM block may specifically include: The processing module 1802 may be configured to: extract information about the OAM block, and delete the OAM block from the block sequence of the first data frame.

Optionally, that the processing module 1802 may be configured to process the OAM block may specifically include: The processing module 1802 is configured to: extract information about the OAM block, and replace the OAM block in the block sequence of the first data frame with an idle I block.

Optionally, the processing module 1802 may be further configured to process the information about the OAM block, to determine transmission performance of the block stream.

All related content of each step involved in the foregoing method embodiment may be referenced to a function description of a corresponding functional module, and details are not described herein again. Because the communication apparatus 180 provided in this embodiment may perform the foregoing information transmission method, for technical effect that can be achieved by the communication apparatus 180, refer to the foregoing method embodiments. Details are not described herein again.

It should be understood that division into modules in embodiments of this application is an example, and is merely logical function division. During actual implementation, there may be another division manner. For example, two or more functions may alternatively be integrated into one processing module. In addition, the integrated module may be implemented in a form of hardware, or may be implemented in a form of a software functional module. This is not limited in this application.

In this embodiment, the communication apparatus 180 is presented in a form of functional modules obtained through division in an integrated manner. The module herein may be an ASIC, a circuit, a processor that executes one or more software or firmware programs, a memory, an integrated logic circuit, and/or another component that can provide the foregoing functions. In a simple embodiment, a person skilled in the art may figure out that the communication apparatus 180 may be in a form of the communication apparatus 190 shown in FIG. 19.

FIG. 19 is a diagram of a structure of another communication apparatus according to an embodiment of this application. As shown in FIG. 19, the communication apparatus 190 includes one or more processors 1901, a communication line 1902, and at least one communication interface (in FIG. 19, an example in which a communication interface 1903 and one processor 1901 are included is only used for description). Optionally, the communication apparatus 190 may further include a memory 1904. The processor 1901 may be a general-purpose central processing unit (central processing unit, CPU), a microprocessor, an application-specific integrated circuit (application-specific integrated circuit, ASIC), or one or more integrated circuits configured to control execution of solution programs of this application. The communication line 1902 may include a path for communication between different components. The communication interface 1903 may be a transceiver module configured to communicate with another device or a communication network, for example, an Ethernet, a RAN, or a wireless local area network (wireless local area network, WLAN). For example, the transceiver module may be an apparatus like a transceiver or a transceiver machine. Optionally, the communication interface 1903 may also be a transceiver circuit located in the processor 1901, and is configured to implement signal input and signal output of the processor. The memory 1904 may be an apparatus having a storage function. The memory 1904 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), or a magnetic disk storage medium or another magnetic storage device, or any other medium that can be configured to carry or store expected program code in a form of instructions or a data structure and that is accessible by a computer, but is not limited thereto. The memory may exist independently, and is connected to the processor through the communication line 1902. The memory may alternatively be integrated with the processor. The memory 1904 is configured to store computer-executable instructions for performing the solutions of this application, and the processor 1901 controls execution. The processor 1901 is configured to execute the computer-executable instructions stored in the memory 1904, to implement the information transmission method provided in embodiments of this application. Alternatively, in embodiments of this application, the processor 1901 performs a processing-related function in the information transmission method provided in the following embodiments of this application, and the communication interface 1903 is responsible for communicating with another device or a communication network. This is not specifically limited in embodiments of this application. The computer-executable instructions in embodiments of this application may also be referred to as application program code. This is not specifically limited in embodiments of this application. In an embodiment, the processor 1901 may include one or more CPUs, for example, a CPU 0 and a CPU 1 in FIG. 19.

In an embodiment, the communication apparatus 190 may include a plurality of processors, for example, the processor 1901 and a processor 1907 in FIG. 19. Each of these processors may be a single-core (single-core) processor, or may be a multi-core (multi-core) processor. The processor may include but is not limited to at least one of the following compute devices that run various types of software: a central processing unit (central processing unit, CPU), a microprocessor, a digital signal processor (digital signal processor, DSP), a microcontroller unit (microcontroller unit, MCU), an artificial intelligence processor, and the like. Each compute device may include one or more cores for executing software instructions to perform an operation or processing.

In an embodiment, the communication apparatus 190 may further include an output device 1905 and/or an input device 1906. The output device 1905 communicates with the processor 1901, and may display information in a plurality of manners. For example, the output device 1905 may be a liquid crystal display (liquid crystal display, LCD), a light emitting diode (light emitting diode, LED) display device, a cathode ray tube (cathode ray tube, CRT) display device, or a projector (projector). The input device 1906 communicates with the processor 1901, and may receive an input of a user in a plurality of manners. For example, the input device 1906 may be a mouse, a keyboard, a touchscreen device, or a sensing device.

The communication apparatus 190 may also be referred to as a communication device sometimes, and may be a general-purpose device or a dedicated device. For example, the communication apparatus 190 may be a controller in a network or a device having a similar structure to that in FIG. 19. A type of the communication apparatus 190 is not limited in embodiments of this application.

The processor 1901 in the communication apparatus 190 shown in FIG. 19 may invoke the computer-executable instructions stored in the memory 1904, so that the communication apparatus 190 performs the information transmission method in the foregoing method embodiments. Because the communication apparatus 190 provided in this embodiment may perform the foregoing information transmission method, for technical effect that can be achieved by the communication apparatus 190, refer to the foregoing method embodiments. Details are not described herein again.

Sequence numbers of the foregoing processes do not mean execution sequences in embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method for each particular application to implement the described functions, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms. The units described as separate components may or may not be physically separate, and components displayed as units may or may not be physical units, may be located in one location, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like.

Terms such as "component", "module", and "system" used in this application indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. As an example, both a compute device and an application that runs on the compute device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system through a network such as the Internet by using a signal). This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be alternatively used.

In addition, the term "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner. In embodiments of this application, one of information (information), signal (signal), message (message), or channel (channel) may be used sometimes. It should be noted that expressed meanings are consistent when differences are not emphasized. The terms "of (of)", "corresponding (corresponding, relevant)", and "corresponding (corresponding)" may sometimes be interchangeably used. It should be noted that meanings expressed by the terms are consistent when differences of the terms are not emphasized. Sometimes, "system" and "network" may be used together. When the difference is not emphasized, the meanings to be expressed are consistent. For example, "communication network" also refers to "communication system". A network architecture and a service scenario described in embodiments of this application are intended to describe technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
obtaining an operation, administration, and maintenance OAM block insertion request;
inserting an OAM block into a block stream in response to the OAM block insertion request, wherein the OAM block is inserted between a first block and a second block in the block stream, and the first block and the second block are any two adjacent blocks in the block stream;
encoding the block stream into which the OAM block is inserted, to obtain an encoded block stream; and
sending the encoded block stream.

2. The method according to claim 1, wherein a difference between a moment at which the OAM block is inserted into the block stream and a moment at which the OAM block insertion request is obtained is less than a time threshold.

3. The method according to claim 1 or 2, wherein inserting the OAM block into the block stream in response to the OAM block insertion request comprises:
in response to the OAM block insertion request, inserting the OAM block into a group of blocks that are first encoded after the moment at which the OAM block insertion request is obtained.

4. The method according to claim 1 or 2, wherein inserting the OAM block into the block stream in response to the OAM block insertion request comprises:
in response to the OAM block insertion request, inserting the OAM block into a group of blocks that are first encoded after a first moment, wherein the first moment is after the moment at which the OAM block insertion request is obtained.

5. The method according to any one of claims 1 to 4, wherein
the block stream comprises a block sequence of a first data frame, and the OAM block is inserted into the block sequence of the first data frame.

6. The method according to claim 5, wherein
the first block is a data D block in the block sequence of the first data frame, and the second block is also a D block in the block sequence of the first data frame; or
the first block is a start S block in the block sequence of the first data frame, and the second block is a D block in the block sequence of the first data frame; or
the first block is a D block in the block sequence of the first data frame, and the second block is a termination T block in the block sequence of the first data frame.

7. An information transmission method, wherein the method comprises:
receiving a block stream, wherein the block stream comprises a block sequence of a first data frame, and the block sequence of the first data frame comprises an OAM block;
processing the OAM block, to obtain a processed block stream; and
decoding the processed block stream.

8. The method according to claim 7, wherein processing the OAM block comprises:
extracting information about the OAM block; and
deleting the OAM block from the block sequence of the first data frame.

9. The method according to claim 7, wherein processing the OAM block comprises:
extracting information about the OAM block; and
replacing the OAM block in the block sequence of the first data frame with an idle I block.

10. The method according to claim 8 or 9, wherein the method further comprises:
processing the information about the OAM block, to determine transmission performance of the block stream.

11. The method according to any one of claims 7 to 10, wherein the OAM block is located between a first block and a second block that are adjacent in the block sequence of the first data frame, wherein
the first block is a data D block in the block sequence of the first data frame, and the second block is also a D block in the block sequence of the first data frame; or
the first block is a start S block in the block sequence of the first data frame, and the second block is a D block in the block sequence of the first data frame; or
the first block is a D block in the block sequence of the first data frame, and the second block is a termination T block in the block sequence of the first data frame.

12. A communication apparatus, wherein the communication apparatus comprises a processing module and a transceiver module, wherein
the transceiver module is configured to obtain an operation, administration, and maintenance OAM block insertion request;
the processing module is configured to insert an OAM block into a block stream in response to the OAM block insertion request, wherein the OAM block is inserted between a first block and a second block in the block stream, and the first block and the second block are any two adjacent blocks in the block stream;
the processing module is further configured to encode the block stream into which the OAM block is inserted, to obtain an encoded block stream; and
the transceiver module is further configured to send the encoded block stream.

13. The communication apparatus according to claim 12, wherein a difference between a moment at which the OAM block is inserted into the block stream and a moment at which the OAM block insertion request is obtained is less than a time threshold.

14. The communication apparatus according to claim 12 or 13, wherein that the processing module is configured to insert the OAM block into the block stream in response to the OAM block insertion request comprises:
the processing module is configured to: in response to the OAM block insertion request, insert the OAM block into a group of blocks that are first encoded after the moment at which the OAM block insertion request is obtained.

15. The communication apparatus according to claim 12 or 13, wherein that the processing module is configured to insert the OAM block into the block stream in response to the OAM block insertion request comprises:
the processing module is configured to: in response to the OAM block insertion request, insert the OAM block into a group of blocks that are first encoded after a first moment, wherein the first moment is after the moment at which the OAM block insertion request is obtained.

16. The communication apparatus according to any one of claims 12 to 15, wherein
the block stream comprises a block sequence of a first data frame, and the OAM block is inserted into the block sequence of the first data frame.

17. The communication apparatus according to claim 16, wherein
the first block is a data D block in the block sequence of the first data frame, and the second block is also a D block in the block sequence of the first data frame; or
the first block is a start S block in the block sequence of the first data frame, and the second block is a D block in the block sequence of the first data frame; or
the first block is a D block in the block sequence of the first data frame, and the second block is a termination T block in the block sequence of the first data frame.

18. A communication apparatus, wherein the communication apparatus comprises a processing module and a transceiver module, wherein
the transceiver module is configured to receive a block stream, wherein the block stream comprises a block sequence of a first data frame, and the block sequence of the first data frame comprises an OAM block;
the processing module is configured to process the OAM block, to obtain a processed block stream; and
the processing module is further configured to decode the processed block stream.

19. The communication apparatus according to claim 18, wherein that the processing module is configured to process the OAM block comprises:
the processing module is configured to: extract information about the OAM block, and delete the OAM block from the block sequence of the first data frame.

20. The communication apparatus according to claim 18, wherein that the processing module is configured to process the OAM block comprises:
the processing module is configured to: extract information about the OAM block, and replace the OAM block in the block sequence of the first data frame with an idle I block.

21. The communication apparatus according to claim 19 or 20, wherein
the processing module is further configured to process the information about the OAM block, to determine transmission performance of the block stream.

22. The communication apparatus according to any one of claims 18 to 21, wherein the OAM block is located between a first block and a second block that are adjacent in the block sequence of the first data frame, wherein
the first block is a data D block in the block sequence of the first data frame, and the second block is also a D block in the block sequence of the first data frame; or
the first block is a start S block in the block sequence of the first data frame, and the second block is a D block in the block sequence of the first data frame; or
the first block is a D block in the block sequence of the first data frame, and the second block is a termination T block in the block sequence of the first data frame.

23. A chip or a chip system, wherein the chip or the chip system comprises a processor, and when a program or instructions are executed by the processor, the chip or the chip system is enabled to perform the method according to any one of claims 1 to 6 or 7 to 11.

24. A computer-readable storage medium, comprising instructions, wherein when the instructions are run on a computer, the computer is enabled to perform the method according to any one of claims 1 to 6 or claims 7 to 11.
